# EUROPEAN PATENT APPLICATION

(11) **EP 4 579 845 A1**
(43) Date of publication of application: **02.07.2025**
(21) Application number: 24757215.9
(22) Date of filing: 14.02.2024
(51) Int. Cl.: H01M 10/0562

(54) **SULFIDE-BASED SOLID ELECTROLYTE, METHOD FOR PREPARING SULFIDE-BASED SOLID ELECTROLYTE, AND ALL-SOLID-STATE BATTERY COMPRISING SULFIDE-BASED SOLID ELECTROLYTE**

(30) Priority: 17.02.2023 JP 2023023528
(71) Applicant: LG Energy Solution, Ltd., Seoul 07335 (KR)
(72) Inventor: IKENOMOTO, Shun, Yokohama-shi, Kanagawa 220--0011 (JP); NARIMATSU, Eiichiro, Yokohama-shi, Kanagawa 220--0011 (JP); MATSUBARA, Keiko, Yokohama-shi, Kanagawa 220--0011 (JP)
(74) Representative: Goddar, Heinz J.
(86) International application number: PCT/KR2024/002104
(87) International publication number: WO 2024/172493

(57) **Abstract**

There are provided a sulfide-based solid electrolyte with improved lithium ionic conductivity, a method for preparing the sulfide-based solid electrolyte and an all-solid-state battery including the sulfide-based solid electrolyte. The present disclosure relates to a sulfide-based solid electrolyte comprising a thio-LISICON Region II-type crystalline phase, wherein the sulfide-based solid electrolyte is glass-ceramic, wherein the sulfide-based solid electrolyte is represented by chemical formula (100-x){(0.75+y/(100-x))Li₂S-0.25P₂S₅}-xLiHa, wherein in the chemical formula, the Ha is at least one selected from halogen elements, and wherein 15≤x≤30 and 0 < y < 2.25 are satisfied.

## Description

### TECHNICAL FIELD

The present disclosure relates to a sulfide-based solid electrolyte, a method for preparing the sulfide-based solid electrolyte and an all-solid-state battery including the sulfide-based solid electrolyte.

The present application claims priority to Japanese Patent Application No. 2023-023528 filed on February 17, 2023, the disclosure of which is incorporated herein by reference.

### BACKGROUND

To achieve higher safety, longer life and higher energy density, all-solid-state batteries using solid electrolytes in place of liquid electrolytes of lithium ion batteries have been developed. Among many solid electrolytes, sulfide-based solid electrolytes, for example, Li₁₀GeP₂S₁₂ have ionic conductivity that is as high as liquid electrolytes and are easy to obtain close contact with soft active materials, so it is expected to commercialize all-solid-state batteries using sulfide-based solid electrolytes.

Lithium metals are attracting attention as a negative electrode material of all-solid-state batteries because they can increase mass energy density (Wh/kg) due to low weight per unit volume and high theoretical capacity. However, sulfide-based solid electrolytes, for example, Li₁₀GeP₂S₁₂ are difficult to use with lithium metal negative electrodes due to low stability for lithium metals.

To solve this problem, Patent Literature 1 to Patent Literature 3 disclose glass-ceramic sulfide-based solid electrolytes that are stable for lithium metals.

However, lithium ionic conductivity of sulfide-based solid electrolytes is reduced by the undesirable skeletal structure of P₂S₆⁴⁻ included in the sulfide-based solid electrolytes.

### [RELATED ART DOCUMENT]

### [Patent Literature]

Patent Literature 1: Japanese Patent Publication No. 2015-011898
Patent Literature 2: Japanese Patent Publication No. 2017-100907
Patent Literature 3: WO2019/098245

### SUMMARY

### Technical Problem

The present disclosure is directed to providing a sulfide-based solid electrolyte with improved lithium ionic conductivity, a method for preparing the sulfide-based solid electrolyte and an all-solid-state battery including the sulfide-based solid electrolyte.

### Technical Solution

To achieve the above-described objective, the present disclosure provides a sulfide-based solid electrolyte comprising a thio-LISICON Region II-type crystalline phase, wherein the sulfide-based solid electrolyte is glass-ceramic, wherein the sulfide-based solid electrolyte is represented by chemical formula (100-x){(0.75+y/(100-x))Li₂S-0.25P₂S₅}-xLiHa, wherein in the chemical formula, the Ha is at least one selected from halogen elements, and wherein 15≤x≤30 and 0 < y < 2.25 are satisfied.

In an embodiment, the x may satisfy 23 ≤ x ≤ 27.

In an embodiment, the y may satisfy 0.2 < y < 0.4.

In an embodiment, the Ha may include Br.

In an embodiment, I₁/I₂ < 0.06 may be satisfied. Here, I₁ is an intensity of peak detected at 380 cm⁻¹ to 400 cm⁻¹ in Raman spectroscopy, and I₂ is an intensity of peak detected at 415 cm⁻¹ to 425 cm⁻¹ in Raman spectroscopy.

The present disclosure provides a method for preparing the sulfide-based solid electrolyte defined in any one of the above-described embodiments, the method including mixing a lithium source, a phosphorus source, a sulfur source and a halogen source to obtain a mixture; and sintering the mixture at a temperature of from 150°C to 250°C.

The present disclosure provides an all-solid-state battery including a positive electrode, a negative electrode and a solid electrolyte layer, wherein the solid electrolyte layer includes the sulfide-based solid electrolyte defined in any one of the above-described embodiments.

### Advantageous Effects

The present disclosure may provide the sulfide-based solid electrolyte with improved lithium ionic conductivity, the method for preparing the sulfide-based solid electrolyte and the all-solid-state battery including the sulfide-based solid electrolyte.

### BRIEF DESCRIPTION OF THE DRAWINGS

FIG. 1 shows X-ray diffraction (XRD) patterns of Example and Comparative Example.
FIG. 2 is a graph showing lithium ionic conductivity as a function of composition of a sulfide-based solid electrolyte.
FIG. 3 shows Raman spectra of Example 2, Comparative Example 1 and Comparative Example 2.

### DETAILED DESCRIPTION

Hereinafter, the present disclosure will be described in more detail.

It should be understood that the words or terms used in the specification and the appended claims should not be construed as being limited to general and dictionary meanings, but rather interpreted based on the meaning and concept corresponding to the technical aspect of the present disclosure on the basis of the principle that the inventor is allowed to define terms appropriately for the best explanation.

### [Solid electrolyte for all-solid-state battery]

A solid electrolyte for an all-solid-state battery of the present disclosure may include at least one of a sulfide-based solid electrolyte, an oxide-based solid electrolyte and a polymer-based solid electrolyte. Preferably, the solid electrolyte for the all-solid-state battery of the present disclosure is a sulfide-based solid electrolyte. The solid electrolyte for the all-solid-state battery may be mixed with a positive electrode mixture material for use as a positive electrode material, and may be mixed with a negative electrode mixture material for use as a negative electrode material, and may be used as a separator. The solid electrolyte for the all-solid-state battery may further include an additive, for example, a lithium salt, a conductive material and a binder resin according to the purpose of use.

### < Sulfide-based solid electrolyte >

The sulfide-based solid electrolyte may include any sulfide-based solid electrolyte containing sulfur (S) commonly used in the art without limitation. The sulfide-based solid electrolyte may be amorphous, glasses or glass-ceramics.

In the present disclosure, the sulfide-based solid electrolyte is glass-ceramics. The glass-ceramic sulfide-based solid electrolyte may have high stability for lithium metals, which makes it possible to use lithium metals having high mass energy density as a negative electrode material. The glass-ceramics are glasses containing microcrystals deposited in the glasses by thermal treatment of the glasses, and are also referred to as crystalline glasses. The glass-ceramic sulfide-based solid electrolyte comprising may have high lithium ionic conductivity due to the microcrystals which promote the conduction of lithium ions.

Non-limiting examples of the sulfide-based solid electrolyte may include at least one of Li₂S-P₂S₅, Li₂S-LiI-P₂S₅, Li₂S-LiI-Li₂O-P₂S₅, Li₂S-LiBr-P₂S₅, Li₂S-Li₂O-P₂S₅, Li₂S-Li₃PO₄-P₂S₅, Li₂S-P₂S₅-P₂O₅, Li₂S-P₂S₅-SiS₂, Li₂S-P₂S₅-SnS, Li₂S-P₂S₅-Al₂S₃, Li₂S-GeS₂, or Li₂S-GeS₂-ZnS. However, the sulfide-based solid electrolyte is not particularly limited thereto.

In the present disclosure, the sulfide-based solid electrolyte includes a thio-LISICON Region II-type crystalline phase. The sulfide-based solid electrolyte may further include other crystalline phase, for example, Li₃PS₄ crystalline phase, Li₄P₂S₆ crystalline phase, Li₇PS₆ crystalline phase and Li₇P₃S₁₁ crystalline phase. The thio-LISICON Region II-type crystalline phase may have high lithium ionic conductivity, and the sulfide-based solid electrolyte including the crystalline phase may have high lithium ionic conductivity.

A ratio of the crystalline phase (in the specification, referred to as a 'crystal structure') included in the sulfide-based solid electrolyte may be quantitatively or non-quantitatively evaluated from an X-ray diffraction (XRD) pattern. As one method, the ratio of the crystalline phase may be evaluated by comparing the peak intensity of the XRD pattern. The peak intensity may be evaluated based on the height or area. The peak of the thio-LISICON Region II-type crystalline phase is observed at 2θ=20.3±0.5°, 23.5±0.5°, 29.6±0.5° in the XRD pattern by XRD measurement.

The sulfide-based solid electrolyte may include an impurity phase. The impurity phase may include a crystalline phase or an amorphous phase, for example, Li₂S phase, P₂S₅ phase, LiI phase, LiBr phase and Li₃PS₄ phase. The impurity phase may reduce the lithium ionic conductivity of the sulfide-based solid electrolyte, and preferably the impurity phase is included in a small amount or is not included at all.

In the present disclosure, the sulfide-based solid electrolyte is represented by the chemical formula of (100-x){(0.75+y/(100-x))Li₂S-0.25P₂S₅}-xLiHa. In the above chemical formula, the Ha is at least one selected from halogen elements, 15≤x≤30, 0 < y < 2.25. As the composition of the sulfide-based solid electrolyte, Li₂S(67%)-P₂S₅(33%), Li₂S(70%)-P₂S₅(30%) and Li₂S(75%)-P₂S₅(25%) (at a molar ratio) is known. The sulfide-based solid electrolyte of the present disclosure has the designed composition including excess Li₂S and lithium hydride (LiHa) based on Li₂S(75%)-P₂S₅(25%) at the of Li₂S to P₂S₅ molar ratio of 3:1. The sulfide-based solid electrolyte having this designed composition may have high lithium ionic conductivity.

In the above chemical formula, x denotes the amount of lithium hydride (LiHa) in the sulfide-based solid electrolyte. The x satisfies 15≤x≤30. Preferably, the x may satisfy 23≤x≤27. More preferably, the x may satisfy 24≤x≤26. More preferably, the x may satisfy x=25. When the x satisfies the aforementioned range, the lithium hydride may suppress the influence of the undesirable skeletal structure of P₂S₆⁴⁻, and the sulfide-based solid electrolyte may have high lithium ionic conductivity.

In the above chemical formula, y denotes excess Li₂S. The y satisfies 0 < y < 2.25. The y may satisfy 0.14 < y < 0.56. Preferably, the y may satisfy 0.2 < y < 0.4. More preferably, they may satisfy 0.25≤y≤0.35. More preferably, they may satisfy 0.26≤y≤0.30. When the y satisfies the aforementioned range, the excess Li₂S may suppress the formation of undesirable skeletal structure of P₂S₆⁴⁻, and the sulfide-based solid electrolyte may have high lithium ionic conductivity. When y=0, it fails to suppress the formation of undesirable skeletal structure, and when y≥2.25, too much Li₂S promotes the formation of undesirable skeletal structure, thereby failing to obtaining the improvement effect of lithium ionic conductivity.

In the above chemical formula, the halogen (Ha) is at least one selected from halogen elements. The halogen (Ha) may include chlorine (Cl), bromine (Br) and iodine (I). Preferably, the halogen (Ha) may include bromine (Br). When the sulfur (S) in the sulfide-based solid electrolyte is a bivalent anion, it attracts lithium ions more strongly than monovalent halogens, notably hindering the movements of lithium ions. In particular, the inclusion of bromine (Br) as halogen may lead to low sulfur (S) occupancy at the specific site in the sulfide-based solid electrolyte, high halogen occupancy at the corresponding site, and high lithium ion mobility near the bromine (Br) site. As a result, it may be possible to improve the lithium ionic conductivity. Additionally, the bromine (Br) binds with Li in the sulfide-based solid electrolyte to form lithium bromide (LiBr) that is a water absorbing material. The lithium bromide (LiBr) absorbs moisture that may reduce the lithium ionic conductivity, thereby further improving the lithium ionic conductivity of the sulfide-based solid electrolyte.

The skeletal structure such as PS₄³⁻(tetrahedron), P₂S₇⁴⁻ (a dimer unit with two PS₄ tetrahedra connected) and P₂S₆⁴⁻ (S is missing from the dimer unit, i.e., a dimer unit with S-vacancy), which constitute the sulfide-based solid electrolyte may be quantitatively or non-quantitatively evaluated from Raman spectra. The P₂S₆⁴⁻ skeletal structure is detected at 380 cm⁻¹ to 400 cm⁻¹, and the peak intensity is expressed as I₁. The PS₄³⁻ skeletal structure is detected at 415 cm⁻¹ to 425 cm⁻¹, and the peak intensity is expressed as I₂. In the present disclosure, the peak intensity is evaluated based on the height. The ratio of the P₂S₆⁴⁻skeletal structure may be quantitatively evaluated by evaluating the peak intensity ratio I₁/I₂. It is known that the P₂S₆⁴⁻ skeletal structure may reduce the lithium ionic conductivity due to the S-vacancy.

Preferably, the sulfide-based solid electrolyte according to the present disclosure may satisfy the peak intensity ratio I_{I}/I₂ < 0.06. More preferably, the peak intensity ratio I₁/I₂≤0.03, more preferably I₁/I₂≤0.01, and most preferably I₁/I₂=0. When the peak intensity ratio I_{I}/I₂ satisfies the aforementioned range, the sulfide-based solid electrolyte includes little to no P₂S₆⁴⁻ skeletal structure that may reduce the lithium ionic conductivity, and as a result, may have high lithium ionic conductivity.

The lithium ionic conductivity (in the specification, also referred to as 'ionic conductivity') of the sulfide-based solid electrolyte refers to lithium ionic conductivity at room temperature (25°C, 298K)·atmospheric pressure (1 atm) unless otherwise stated. When the sulfide-based solid electrolyte is used in all-solid-state batteries, in practice, the lithium ionic conductivity is preferably 4 mS/cm or more. The lithium ionic conductivity of the sulfide-based solid electrolyte of the present disclosure is 2.4 mS/cm or more, preferably 2.9 mS/cm or more, more preferably 4 mS/cm or more, much more preferably 5 mS/cm or more, and most preferably 5.5 mS/cm or more.

The sulfide-based solid electrolyte of the present disclosure may be obtained by a preparation method including the steps of: mixing a lithium source, a phosphorus source, a sulfur source and a halogen source to obtain a mixture, and sintering the mixture under an inert atmosphere, for example, argon gas and nitrogen gas at the temperature of from 150°C to 250°C. The step of obtaining the mixture and the step of sintering the mixture may be performed in an inert gas atmosphere, for example, argon gas and nitrogen gas.

The lithium source, the phosphorus source, the sulfur source and the halogen source may be a compound, for example, sulfide, oxide or nitride. Lithium sulfide (Li₂S) may be used as the lithium source, phosphorus pentasulfide (P₂S₅) may be used as the phosphorus source, and halogenated lithium (LiHa) such as lithium bromide (LiBr) and lithium iodide (LiI) may be used as the halogen source. Additionally, sulfur may be supplied from another element source. That is, at least one of the lithium source, the phosphorus source or the halogen source may also serve as the sulfur source.

The step of obtaining the mixture is a step of mixing·grinding the raw materials, i.e., the lithium source, the phosphorus source, the sulfur source and the halogen source, to make them amorphous·glassy. The step of obtaining the mixture may be performed using a mechanical milling machine known in the corresponding technical field. The mechanical milling machine may include a ball mill, a bead mill, a shaker and a grinder. The conditions of the mechanical milling machine, for example, rotation speed, time and frequency may be properly set by those skilled in the art to make the raw materials amorphous·glassy.

The sintering step is a step of crystallizing at least some of the amorphous·glassy mixture to form glass-ceramics. The sintering temperature is from 150°C to 250°C. Preferably, the sintering temperature is from 170°C to 230°C, and more preferably, from 180°C to 220°C. When the sintering temperature satisfies the aforementioned range, it may be possible to promote the formation of the thio-LISICON Region II-type crystalline phase, thereby obtaining the glass-ceramic sulfide-based solid electrolyte. Because the thio-LISICON Region II-type crystalline phase has high lithium ionic conductivity, the sulfide-based solid electrolyte including this crystalline phase may have high lithium ionic conductivity.

### [All-solid-state battery]

The electrolyte for the all-solid-state battery of the present disclosure may be used in an all-solid-state battery including a positive electrode, a negative electrode and a solid electrolyte layer. The solid electrolyte for the all-solid-state battery may be used with an active material in an electrode active material layer of the positive electrode and the negative electrode. The solid electrolyte for the all-solid-state battery may be used as a material of the solid electrolyte layer. The electrolyte for the all-solid-state battery may have the controlled average particle size according to the purpose of use. The lithium ionic conductivity may be improved by controlling the average particle size of the electrolyte for the all-solid-state battery.

### < Solid electrolyte layer>

In the present disclosure, the solid electrolyte layer may have a thickness of about 50 *µ*m or less, and preferably from about 15 *µ*m to 50 *µ*m. Within the aforementioned range, the solid electrolyte layer may have a proper thickness in view of lithium ionic conductivity, mechanical strength or energy density of the battery applied. For example, in terms of lithium ionic conductivity or energy density, the thickness may be 10 *µ*m or more, 20 *µ*m or more, or 30 *µ*m or more. Meanwhile, in terms of mechanical strength, the thickness may be 50 *µ*m or less, 45 *µ*m or less, or 40 *µ*m or less. Additionally, in addition to the aforementioned thickness range, the solid electrolyte layer may have a tensile strength of from about 100 kgf/cm² to about 2,000 kgf/cm². Additionally, the solid electrolyte layer may have a porosity of 15 vol% or less or about 10 vol% or less. For example, the porosity may be evaluated by water immersion porosimetry. As described above, the solid electrolyte layer of the present disclosure is a thin film but may have high mechanical strength.

### < Positive electrode and negative electrode >

In the present disclosure, the positive electrode and the negative electrode includes a current collector and an electrode active material layer on at least one surface of the current collector, and the electrode active material layer includes a plurality of electrode active material particles and a solid electrolyte. Additionally, the electrode may further include at least one of a conductive material or a binder resin, if necessary. Additionally, the electrode may further include a variety of additives to supplement or improve the physical and chemical properties of the electrode.

In the present disclosure, the negative electrode active material may include any type of negative electrode active material for lithium ion secondary batteries. For example, the negative electrode active material may include at least one selected from carbon such as nongraphitizing carbon, graphite carbon; metal composite oxide such as LiₓFe₂O₃ (0≤x≤1), LiₓWO₂ (0≤x≤1), SnₓMe₁₋ₓMe'_{y}O_{z} (Me: Mn, Fe, Pb, Ge; Me': Al, B, P, Si, Groups 1, 2 and 3 elements in the periodic table, halogen; 0<x≤1; 1≤y≤3; 1≤z≤8); lithium metals; lithium alloys; silicon metals; silicon-based alloys; indium metals; indium alloys; tin-based alloys; metal oxide such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄ and Bi₂O₅; conductive polymers such as polyacetylene; Li-Co-Ni based materials; titanium oxide; lithium titanium oxide. In a specific embodiment, the negative electrode active material may include carbon-based materials and/or Si.

In the case of the positive electrode, the electrode active material may include, without limitation, any type of positive electrode active material for lithium ion secondary batteries. For example, the positive electrode active material may include layered compounds such as lithium cobalt oxide (LiCoO₂), lithium nickel oxide (LiNiO₂), or compounds substituted by one or more transition metals; lithium manganese oxide of chemical formula Li₁₊ₓMn₂₋ₓO₄ (x is from 0 to 0.33), LiMnO₃, LiMn₂O₃, LiMnO₂; lithium copper oxide (Li₂CuO₂); vanadium oxide such as LiV₃O₈, LiV₃O₄, V₂O₅, Cu₂V₂O₇; Ni site type lithium nickel oxide represented by chemical formula LiNi₁₋ₓAₓO₂ (A=Co, Mn, Al, Cu, Fe, Mg, B or Ga, x=0.01 to 0.3); lithium manganese composite oxide represented by chemical formula LiMn₂₋ₓAₓO₂ (A=Co, Ni, Fe, Cr, Zn or Ta, x=0.01 to 0.1) or Li₂Mn₃AO₈ (A=Fe, Co, Ni, Cu or Zn); lithium manganese composite oxide of spinel structure represented by LiNiₓMn₂₋ₓO₄; NCM-based composite oxide represented by Li(NiₐCo_{b}Mnₑ)O₂ (each of a, b and c is independently the atomic fraction of the element, 0<a<1, 0<b<1, 0<c<1, a+b+c=1); LiMn₂O₄ with partial substitution of alkaline earth metal ions for Li in chemical formula; disulfide compounds; Fe₂(MoO₄)₃, but is not limited thereto.

In the present disclosure, the current collector may include any proper current collector having electrical conductivity known in the field of secondary batteries, for example, metal plates, according to the polarity of the electrode.

In the present disclosure, the conductive material is generally added in an amount of from 1 wt% to 30 wt% based on the total weight of the mixture including the electrode active material. The conductive material is not limited to a particular type and may include any material having conductivity without causing any chemical change in the corresponding battery. For example, the conductive material may include one selected from graphite such as natural graphite or artificial graphite; carbon black such as carbon black, acetylene black, Ketjen black, channel black, furnace black, lamp black, thermal black; conductive fibers such as carbon fibers or metal fibers; fluoro carbon, metal powder such as aluminum powder, nickel powder; conductive whiskers such as zinc oxide, potassium titanate; conductive metal oxide such as titanium oxide; conductive polymer such as polyphenylene derivatives or a mixture thereof.

In the present disclosure, the binder resin is not limited to a particular type and may include those that help the bonding between the active material and the conductive material and bonding to the current collector. For example, the binder resin may include polyvinylidene fluoride, polyvinylalcohol, carboxymethyl cellulose (CMC), starch, hydroxypropylcellulose, regenerated cellulose, polyvinylpyrrolidone, tetrafluoro ethylene, polyethylene, polypropylene, ethylene-propylene-diene monomer (EPDM), sulfonated EPDM, styrene butadiene rubber, fluoro rubber, a variety of copolymers thereof. The binder resin may be generally included in a range between 1 wt% and 30 wt% or between 1 wt% and 10 wt% based on 100 wt% of the electrode active material layer.

In the present disclosure, the electrode active material layer may include at least one type of additive of an oxidation stabilizer additive, a reduction stabilizer additive, a flame retardant, a thermal stabilizer or an antifogging agent, if necessary.

The present disclosure provides a secondary battery having the above-described structure. The present disclosure further provides a battery module including the secondary battery as a unit cell, a battery pack including the battery module and a device including the battery pack as a power source. In this instance, the device may include any type of device that works using power produced by an electric motor, for example, power tools; electric cars including Electric Vehicles (EV), Hybrid Electric Vehicles (HEV), Plug-in Hybrid Electric Vehicles (PHEV); electric two-wheeled vehicles including E-bikes and E-scooters; electric golf carts; and electric power systems, but is not limited thereto.

Hereinafter, the present disclosure will be described in more detail through examples. However, the following description is presented to describe the present disclosure by way of example, and the scope of the present disclosure is not limited thereto.

### Example 1

A mixture powder was obtained by weighing and mixing using a mortar within an Ar gas glovebox using lithium sulfide (Li₂S, Mitsuwa Chemical product), phosphorus pentasulfide (P₂S₅, Aldrich product), lithium bromide (LiBr, Aldrich product) and lithium iodide (LiI, Aldrich product) as raw materials. The designed composition was (56.25+y)Li₂S-18.75P₂S₅-15LiBr-10Lil, with an excess amount of Li₂S such that y=0.14. The mixture powder was placed in a ZrO₂ pot together with ZrO₂ balls, followed by sealing to obtain the hermetically sealed pot. The hermetically sealed pot was installed at a planetary ball mill to perform ball milling at 500 rpm for 20 hours, and the pot was opened in the glovebox to collect the powder. The powder was placed in a carbon crucible which in turn, was sealed, and sintered in the Ar gas flow at 200°C for 3 hours. The sintered powder was collected to obtain a solid electrolyte.

### Example 2

As shown in TABLE 1, except that the amount y of the Li₂S added in excess was 0.28, a solid electrolyte was obtained in the same way as Example 1.

### Example 3

As shown in TABLE 1, except that the amount y of the Li₂S added in excess was 0.56, a solid electrolyte was obtained in the same way as Example 1.

### Example 4

As shown in TABLE 1, except that the amount y of the Li₂S added in excess was 1.22, a solid electrolyte was obtained in the same way as Example 1.

### Example 5

As shown in TABLE 1, except that the amount y of the Li₂S added in excess was 1.69, a solid electrolyte was obtained in the same way as Example 1.

### Comparative Example 1

As shown in TABLE 1, excess Li₂S was not added. That is, except that the amount y of the Li₂S added in excess was 0, a solid electrolyte was obtained in the same way as Example 1.

### Comparative Example 2

As shown in TABLE 1, except that the amount y of the Li₂S added in excess was 2.25, a solid electrolyte was obtained in the same way as Example 1.

**[TABLE 1]**

| Sample | Designed composition (56.25+y)Li₂S-18.75P₂S₅-15LiBr-10LiI | Ionic conductivity (σ25°C) (mS/cm) | I₁/I₂ |
|---|---|---|---|
| | y | | |
| Example 1 | 0.14 | 2.9 | 0.10 |
| Example 2 | 0.28 | 5.5 | N.A. |
| Example 3 | 0.56 | 2.6 | 0.07 |
| Example 4 | 1.22 | 3.1 | 0.07 |
| Example 5 | 1.69 | 3.0 | 0.06 |
| Comparative Example 2 | 2.25 | 0.9 | 0.06 |
| Comparative Example 1 | 0 | 2.3 | 0.08 |

### [Evaluation]

The following evaluation was performed using the obtained solid electrolyte.

### (XRD measurement)

A predetermined amount of solid electrolyte was placed at a hermetically sealed holder in an Ar gas glovebox and XRD measurement was performed.

### (Lithium ionic conductivity measurement)

A predetermined amount of solid electrolyte was placed in an MACOR^{®} pipe, and press-formed at 5 MPa by a single screw press in combination with the MACOR^{®} pipe and a pellet forming jig (an upper press pin and a lower press pin). Subsequently, a predetermined amount of gold powder was placed on both sides of the pellet, and press-formed at 7.5 MPa by the single screw press to obtain a MACOR^{®} pipecell. The obtained MACOR^{®} pipecell was installed at a jig cell for electrochemical measurement, and a torque was applied up to 5.0 N·m using a torque wrench to obtain a lithium ionic conductivity measurement cell. The obtained lithium ionic conductivity measurement cell was connected to an impedance measuring machine, and the resistance of the solid electrolyte pellet was measured at room temperature (298 K)·atmospheric pressure (1 atm) and used to determine the lithium ionic conductivity[mS/cm] of the solid electrolyte.

### (Raman spectroscopy measurement)

A predetermined amount of solid electrolyte was placed in a hermetically sealed holder and Raman spectroscopy (Lambda Vision, MicroRAM, using a laser of 532nm excitation wavelength) was performed. The presence or absence of P₂S₆⁴⁻ peak detected at 380 cm⁻¹ to 400 cm⁻¹ and its intensity I₁ and PS₄³⁻ peak intensity I₂ detected at 415 cm⁻¹ to 25 cm⁻¹ were measured and a peak intensity ratio I₁/I₂> was evaluated. The peak intensity was based on the height of the peak.

### [Evaluation results]

### (Crystalline phase)

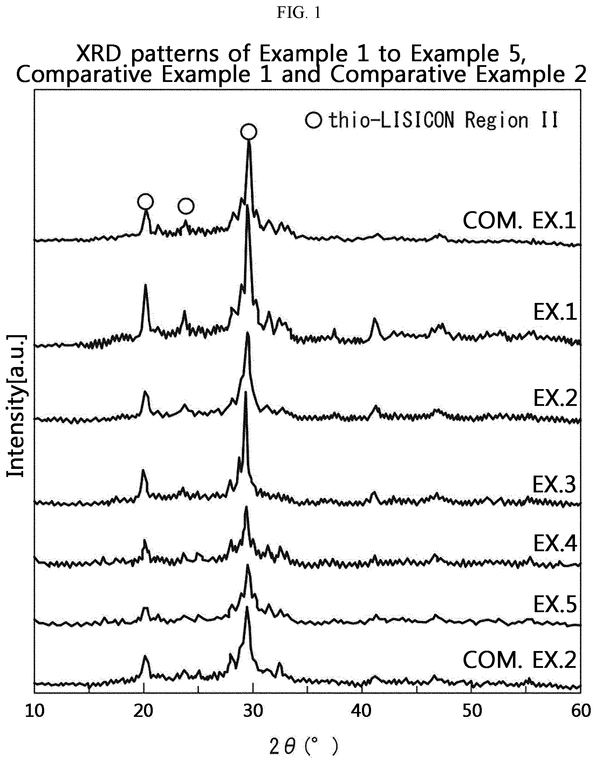

FIG. 1 shows the XRD pattern by the XRD measurement. As shown in FIG. 1, in all the Examples 1 to 5 and Comparative Examples 1 and 2, peaks originating from the thio-LISICON Region II -type crystalline phase were observed at 2θ =20.3 ± 0.5°, 23.5±0.5°, and 29.6±0.5°, confirming that theglass-ceramic sulfide-based solid electrolyte was obtained. The other peaks observed in the XRD pattern may originate from other crystalline phase and the raw materials, i.e., Li₂S, P₂S₅, LiBr and LiI.

### (Lithium ionic conductivity)

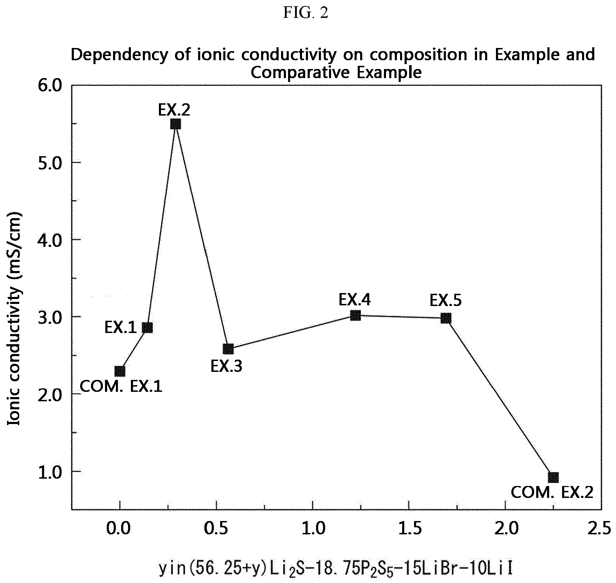

TABLE 1 shows the lithium ionic conductivity measurement results. Additionally, FIG. 2 shows the dependency of the lithium ionic conductivity on the composition. In FIG. 2, the horizontal axis indicates the amount y of Li₂S added in excess in the designed composition (56.25+y)Li₂S-18.75P₂S₅-15LiBr-10LiI, and the vertical axis indicates lithium ionic conductivity. As shown in TABLE 1, in Examples 1 to 5, the lithium ionic conductivity was in a range between 2.6 mS/cm and 5.5 mS/cm. On the other hand, in Comparative Example 1 without excess addition of Li₂S, the lithium ionic conductivity was 2.3 mS/cm, and in Comparative Example 2 in which the amount y of Li₂S added in excess was 2.25, the lithium ionic conductivity was 0.9 mS/cm. By the excess addition of Li₂S in the specific amount, the lithium ionic conductivity was increased. In particular, in Example 2 in which the amount y of Li₂S added in excess was 0.28, the highest lithium ionic conductivity of 5.5 mS/cm was manifested. It was confirmed that the lithium ionic conductivity of the solid electrolyte is improved by increasing the molar ratio of Li₂S to P₂S₅ slightly more than 3.

### (Raman spectrum)

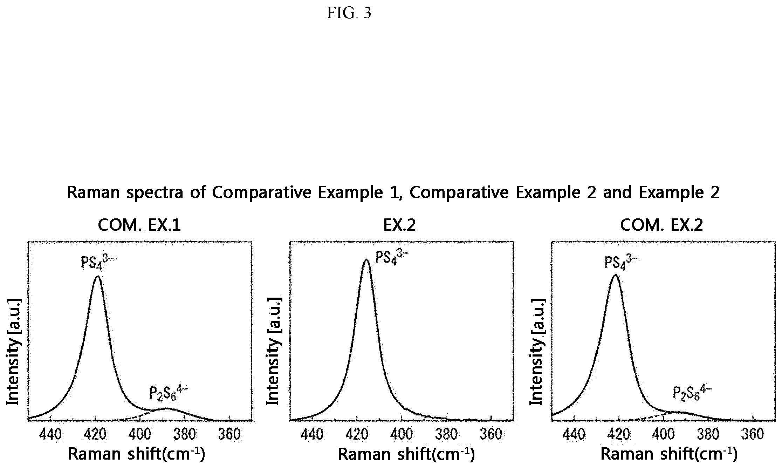

FIG. 3 shows Raman spectra of Example 2 and Comparative Examples 1 and 2. In all the samples, PS₄³⁻ peak at 415 cm⁻¹ to 425 cm⁻¹ was detected. On the other hand, P₂S₆⁴⁻peak at 380 cm⁻¹ to 400 cm⁻¹ was detected in Comparative Examples 1 and 2, but not detected in Example 2 exhibiting high lithium ionic conductivity. Although not shown, in Examples 1 and 3 to 5, P₂S₆⁴⁻ peak at 380 cm⁻¹ to 400 cm⁻¹ was detected.

TABLE 1 shows the peak intensity ratio I₁/I₂ of P₂S₆⁴⁻ peak intensity I₁ and PS₄³⁻peak intensity I₂ obtained from the Raman spectra. In Example 2 showing high lithium ionic conductivity, P₂S₆⁴⁻ peak was not detected, so the peak intensity ratio I_{I}/I₂ was substantially zero (N.A). In Examples 1 and 3 to 5 and Comparative Example 2 with the excess addition of Li₂S, the peak intensity ratio I_{I}/I₂ was from 0.06 to 0.1, and in Comparative Example 1 without excess addition of Li₂S, the peak intensity ratio I_{I}/I₂ was 0.08. In Example 2 of y=0.28, the lithium ionic conductivity was significantly improved. Although not constrained to the theory, it is thought that S supplied from excess Li₂S fills the S-vacancy presumably considered as the cause of P₂S₆⁴⁻ skeletal structure formation, thereby improving the lithium ionic conductivity.

While the present disclosure has been hereinabove described by a limited number of embodiments and drawings, the present disclosure is not limited thereto, and it is obvious to persons having ordinary skill in the technical field pertaining to the present disclosure that a variety of modifications and change may be made within the technical aspect of the present disclosure and the appended claims and their equivalent scope.

## Claims

1. A sulfide-based solid electrolyte comprising:
a thio-LISICON Region II-type crystalline phase,
wherein the sulfide-based solid electrolyte is glass-ceramic,
wherein the sulfide-based solid electrolyte is represented by chemical formula (100-x){(0.75+y/(100-x))Li₂S-0.25P₂S₅}-xLiHa,
wherein in the chemical formula, the Ha is at least one selected from halogen elements, and
wherein 15≤x≤30 and 0 < y < 2.25 are satisfied.

2. The sulfide-based solid electrolyte according to claim 1, wherein the x satisfies 23 ≤ x ≤ 27.

3. The sulfide-based solid electrolyte according to claim 2, wherein the y satisfies 0.2 < y < 0.4.

4. The sulfide-based solid electrolyte according to claim 3, wherein the Ha includes Br.

5. The sulfide-based solid electrolyte according to claim 1, wherein I_{I}/I₂ < 0.06 is satisfied, and
wherein I₁ is an intensity of peak detected at 380 cm⁻¹ to 400 cm⁻¹ in Raman spectroscopy, and I₂ is an intensity of peak detected at 415 cm⁻¹ to 425 cm⁻¹ in Raman spectroscopy.

6. A method for preparing the sulfide-based solid electrolyte defined in claim 1, the method comprising:
mixing a lithium source, a phosphorus source, a sulfur source and a halogen source to obtain a mixture; and
sintering the mixture at a temperature of from 150°C to 250°C.

7. An all-solid-state battery comprising:
a positive electrode, a negative electrode and a solid electrolyte layer,
wherein the solid electrolyte layer includes the sulfide-based solid electrolyte defined in claim 1.
